Europäisches Patentamt

European Patent Office

Office européen des brevets

(11) Publication number: **0 015 276**
**B1**

# (12) EUROPEAN PATENT SPECIFICATION

(45) Date of publication of patent specification: **01.02.84**

(51) Int. Cl.³: **G 06 F 7/00, G 06 F 9/38**

(21) Application number: **79900705.9**

(22) Date of filing: **07.06.79**

(86) International application number:
**PCT/US79/00402**

(87) International publication number:
**WO 80/00043 10.01.80 Gazette 80/1**

(54) A DIGITAL PIPELINED COMPUTER.

| | |
|---|---|
| (30) Priority: **09.06.78 US 913996** | (73) Proprietor: **NCR Corporation**<br>**World Headquarters**<br>**Dayton Ohio 45479 (US)** |
| (43) Date of publication of application:<br>**17.09.80 Bulletin 80/19** | |
| | (72) Inventor: **MARRO, Daniel Joseph**<br>**1333 East Grand Avenue Apt. C-201**<br>**Escondido, CA 92027 (US)** |
| (45) Publication of the grant of the patent:<br>**01.02.84 Bulletin 84/5** | Inventor: **SCHUCK, David Burton**<br>**1640 Queenston Drive**<br>**Escondido, CA 92027 (US)** |
| (84) Designated Contracting States:<br>**DE FR GB** | |
| | (74) Representative: **Robinson, Robert George**<br>**International Patent Department NCR Limited 206**<br>**Marylebone Road**<br>**London NW1 6LY (GB)** |
| (56) References cited:<br>**DE - A - 2 704 842**<br>**US - A - 3 614 742**<br>**US - A - 3 713 107**<br>**US - A - 3 949 379**<br>**US - A - 4 041 461**<br>**US - A - 4 079 456**<br>**US - A - 4 112 489** | |
| | (56) References cited:<br>**PROCEEDINGS OF THE ANNUAL SYMPOSIUM**<br>**ON COMPUTER ARCHITECTURE, IEEE, 1973,**<br>**New York US COOPER: "Micromodules:**<br>**microprogrammable buildingblocks for**<br>**hardware development", pages 221-225**<br>**EUROMICRO NEWSLETTER, vol. 2, no. 4,**<br>**October 1976, Compiegne, FR ROMANI: "A**<br>**pipeline architecture oriented towards efficient**<br>**multitasking", pages 40-47** |

Courier Press, Leamington Spa, England.

# A Digital Pipelined Computer

## Technical Field

This invention relates to digital pipelined computers of the kind including memory means arranged to store programs of high level language instructions, a plurality of microprogrammed digital processor means each coupled to said memory means, and interface means intercoupling said processor means to form a pipeline and including at least one buffer register means coupled between first and second selected ones of said processor means, and synchronizing means.

It should be understood that a pipelined computer is one which has a plurality of processing stages in series forming a "pipeline". The processing stages are operative in turn to execute successive phases of an instruction and different phases of different instructions are executable concurrently by different ones of the processing stages. Such a computer can have a high operating speed.

## Background Art

A general pipelined computer structure is known from German Offenlegungsschrift No. 27 04 842, corresponding to British Patent Specification No. 1,506,972. The known computer includes a plurality of microprogrammed processing means forming stages in a pipeline. Shifting of information along the pipeline occurs when all the processor means have completed operation. This shifting arrangement is relatively slow. An alternative faster shifting arrangement includes a "handshaking" procedure wherein each processing unit contains a handshaking microprogram routine and communicates with adjacent processing units by means of "ready" and "accepted" signals. Under this arrangement, whenever a given stage completes its current operation it sends a "ready" signal to the next stage. It then waits for the next stage to indicate its acceptance of the transferred information by issuing an "accepted" signal, and then further waits for a "ready" signal from the preceding stage. When this is received, information is transferred into the buffer of the given stage from the buffer of the preceding stage (double-buffering). The given stage transmits an "accepted" signal to the preceding stage and is now ready to start operation. This shifting arrangement has the disadvantage of being relatively slow because of the need to exchange "ready" and "accepted" signals before further operations can take place.

In an article by R. G. Cooper: "Micromodules: Microprogrammable Building Blocks for Hardware Development", Proceedings of the Annual Symposium on Computer Architecture, University of Florida, Dec. 9—11, IEEE, 1973, pages 221—226, there is discussed in general terms the utilization of microprogrammable modules in computer hardware. This article does not disclose a pipelined computer of the kind specified herein, wherein a plurality of microprogrammed digital processor means are coupled to memory means. Section III of the article discloses the general design considerations for interconnecting modules and suggests that an output port on one module be coupled to an input port on another module. The cables interconnecting the modules include two wires utilized for handshaking signals. Each port includes a "full" flip-flop which indicates whether or not the port contains data. If a microinstruction attempts to read data from an input port which does not contain data, completion of that microinstruction is suspended until the data is transferred into that port. Similarly, if a microinstruction attempts to place data in an output port which already contains data, completion of the microinstruction is suspended until the port empties. Thus data is double buffered. In Section V of said article, a pipelined structure is suggested wherein the modules have respective buffers coupled to their outputs. With this construction there is utilized a pipeline executive microprogram concerned with reading and writing data packets and making the decision whether to process or pass the current packet.

In an article by F. Romani: "A Pipeline Architecture Oriented Towards Efficient Multitasking", Euromicro Newsletter, vol. 2, No. 4, October 1976, pages 40—47, there is disclosed a pipelined computer including a plurality of modules which may be microprogrammable and which are arranged in a pipeline, two of the modules in the pipeline having access to a system memory. The various units in the pipeline are interconnected by FIFO queues.

## Disclosure of the Invention

It is an object of the present invention to provide a digital pipelined computer of the kind specified which has a high speed of operation.

Therefore, according to the present invention, there is provided a digital pipelined computer of the kind specified, characterized in that said synchronizing means are coupled to said selected ones of said processor means and to said buffer register means, in that said buffer register means includes a buffer register providing a single level of buffer storage, and in that said synchronizing means includes a bistable circuit arranged to be controlled to a first stage upon said buffer register being loaded and to be controlled to a second state upon said buffer register being read, first gating means coupled to said bistable circuit and to said first selected one of said processor means and adapted to provide a first control signal in response to an output request signal from said first selected

**0015 276**

one of said processor means when said bistable circuit is in said first state, said first control signal being adapted to halt operation of said first selected one of said processing means; and second gating means coupled to said bistable circuit and to said second selected one of said processor means and adapted to provide a second control signal in response to an input request signal from said second selected one of said processor means when said bistable circuit is in said second stage, said second control signal being adapted to halt operation of said second selected one of said processor means.

It will be appreciated that a pipelined computer according to the invention has a high speed of operation resulting from the provision of first and second control signals when an attempt is made to load or read a full or empty buffer register means respectively.

Brief Description of the Drawings

One embodiment of the present invention will now be described by way of example with reference to the accompanying drawings, in which:

Figure 1 is a block diagram of a pipelined computer according to the invention.

Figure 2 is a diagram illustrating a format of one high level language instruction set which is executed by the pipelined computer of Figure 1.

Figure 3 is a set of tables listing tasks which the various computers perform within the pipelined computer of Figure 1.

Figure 4 is a timing diagram illustrating the overlap operation of the pipeline of the pipelined computer of Figure 1.

Figure 5 is a block diagram of a hardwired three stage pipeline computer which comprises one of the microprogrammable stages of the pipelined computer of Figure 1.

Figure 6 is a timing diagram illustrating the operation of the hardwired pipeline of the computer of Figure 5 in conjunction with the microprogrammed stages within the pipelined computer of Figure 1.

Figure 7 is a detailed logic diagram of one preferred embodiment of the interlocking interface in the pipelined computer of Figure 1.

Best Mode for Carrying Out the Invention

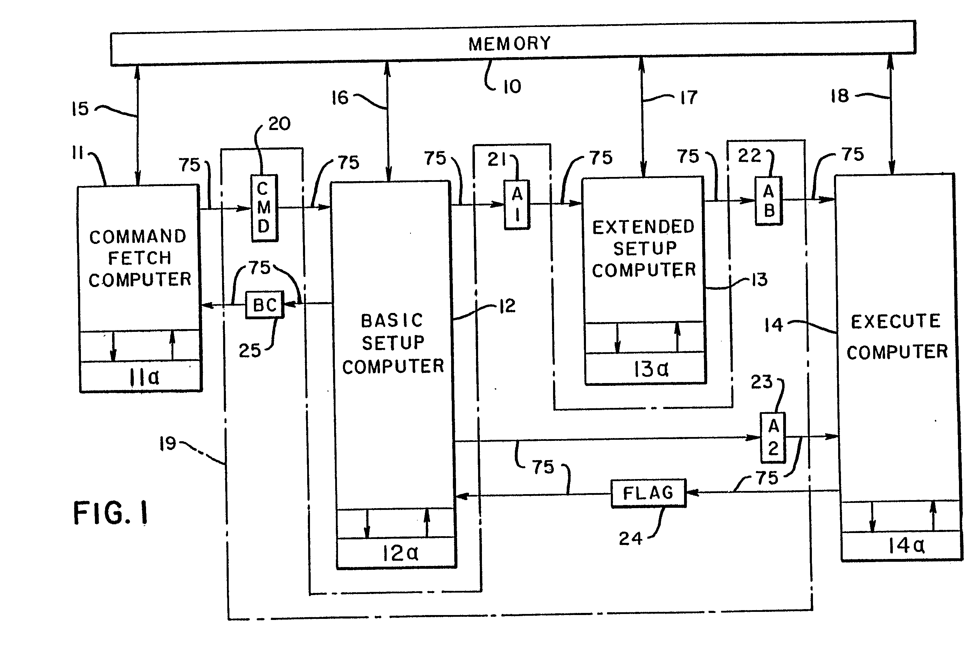

A preferred embodiment of a pipelined computer constructed according to the invention will now be described in conjunction with Figure 1. This embodiment includes a digital memory 10 for storing therein programs comprised of high level language instructions. Also included are a plurality of microprogrammed digital computers 11—14 having respective control store memories 11a—14a for their microprograms. Computers 11—14 also respectively have interfaces 15—18 to memory 10. An interlocking interface 19 intercouples computers 11—14 to form a pipeline for executing the high level language instructions in memory 10. Each of the computers 11—14 is a separately microprogrammable stage of this pipeline.

Basically, this pipeline operates as follows. Computer 11 executes its microprogram in control store 11a, which operates to fetch the high level language instructions from memory 10. These fetched instructions also are aligned in a predetermined format and loaded into registers 20 in interface 19 under microprogram control. Computer 12 executes its microprogram in control store 12a, which operates to receive the aligned instructions from register 20 and calculate the memory addresses of the operands for these instructions. The calculated addresses are also loaded into register 21 under microcode control.

Computer 13 executes its microcode in control store 13a to receive the addresses from register 21, and fetches from memory 10 a portion of the operands which are indicated by the addresses. These operands and corresponding addresses are loaded into a register 22 within interface 19. Computer 14 executes microcode in control store 14a to receive the operand and addresses in register 22, and performs operations on the operand as specified by the high level language instruction. Computer 14 also fetches from memory 10 any remaining portions of the operand and performs thereon the operation specified by the high level language instruction.

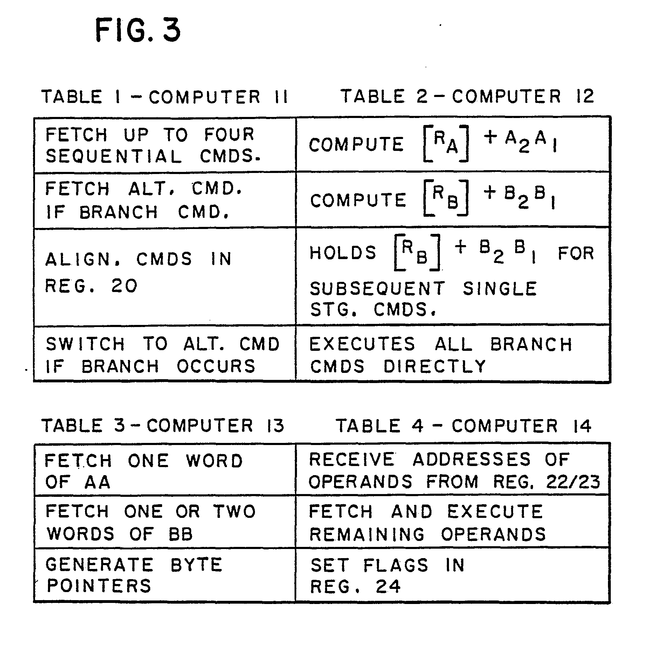

Also included in the illustrated preferred embodiment are registers 23, 24 and 25. Register 23 is included within interface 19 to provide a means for computer 12 to transfer the calculated operand addresses of the high level language instructions directly to computer 14. In operation, computer 12 sends the results of its processing of the high level language either to computer 13 or computer 14 depending on the particular high level instruction that is being processed. Register 24 and 25 provide a means whereby computers 14 and 12 respectively can indicate the results of their operation to computers lying upstream in the pipeline. These results are indicated by various flags and branch control information for example. The precise tasks performed by computers 11—14 and the information which they transfer via registers 20—25 will be explained in greater detail in conjunction with Figure 3.

In one preferred version of the Figure 1 embodiment, computers 11—14 each consist of the same identical hardware. That is, computers 11—14 differ only in their respective microprograms. Accordingly, this version has an extremely regular architecture. It also increases the volume of the single computer that is used for each of the stages by a factor of four over the volume of the pipelined computer. This increased volume leads to a reduced cost for the pipelined computer. Also, the regularized structure decreases the complexity of the pipelined computer, which makes for ease of design and maintenance.

Also preferably, each of the computers 11—14 execute their respective microprograms in their own internal pipeline. That is, computers 11—14 preferably each include a plurality of hardwired execution stages which are interconnected in a pipeline. The pipeline within computer 11 executes the microprograms in control store 11a of computer 11; the pipeline in computer 12 executes the microprograms in control store 12a of computer 12; etc. Any number of stages may comprise the respective pipelines within computers 11—14. For example, computers 11 and 24 may each include a three stage pipeline while computers 12 and 13 may each include a two stage pipeline. At the same time of course, computers 11—14 each form one stage of the computerized computer having higher level language instructions in memory 10.

In addition, control stores 11a—14a preferably are each writable control stores. That is, modifiable microprograms can be stored therein. This provides a means whereby one set of microprograms can be stored in control stores 11a—14a during one time interval to execute one set of high level language instructions; while a second set of microprograms can be stored in control stores 11a—14a during a second time interval to execute a corresponding second set of high level language instructions.

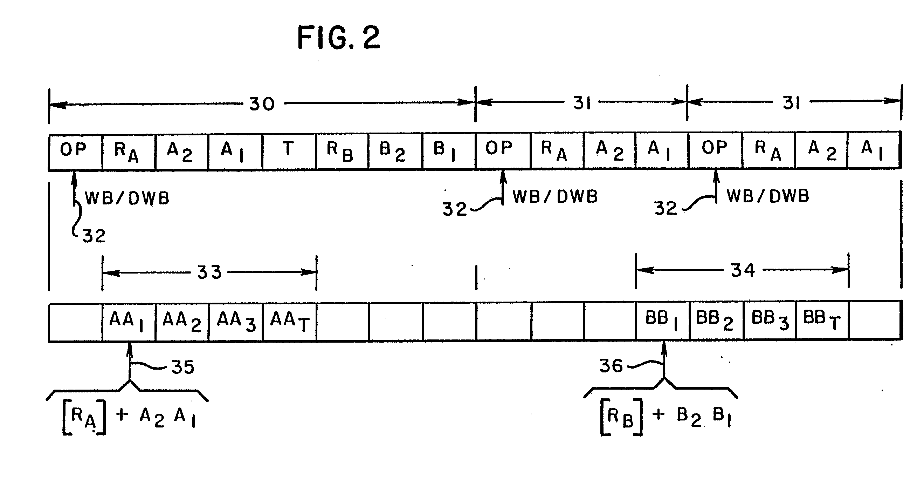

A format for one set of high level language instructions, and their associated operands, which is suitable for being processed by the disclosed pipelined computer is illustrated in Figure 2. These instructions are the machine language of a Century 100 processor as described in the publication entitled "615—100 Functional Specification" from NCR Corporation. Basically, these high level language instructions have a double stage format 30 and a single stage format 31. Double stage commands 30 include eight bytes of information which are indicated in Figure 2 by the squares labeled OP through B1. Single stage command 31 includes four bytes of information as indicated in Figure 2 by the squares labeled OP through A1.

In formats 30 and 31, the symbol OP represents one of the following operation codes: Pack, Unpack, Add Unsigned, Subtract Unsigned, Add Binary, Subtract Binary, Branch Overflow, Branch Less, Branch On Equal, Branch Less Or Equal, Branch Greater, Branch Less Or Greater, Branch Greater Or Equal, Branch Unconditionally, Move A Right To Left, Compare Binary, Repeat, and Wait. All of these instructions pass through the stages of the pipeline formed by computers 11 and 12. The Add Binary, Subtract Binary, Move A Right To Left, and Compare Binary instructions also pass through computers 13 and 14. In comparison, the Pack, Unpack, Add Unsigned, Subtract Unsigned instructions pass through computer 14 but bypass computer 13.

Each of the above described operation codes can be incorporated into the double stage format 30 or the single stage format 31. Single stage format commands have a B address equal to the B address which results from execution of the preceding command. For example, the B address which results from execution of a Binary Compare command is the same as its initial B address. Accordingly, one task which computer 12 performs is to save fields T—B1 of a double stage command and use them to form the B address for subsequent single stage commands.

Each of the above described operation codes may also be aligned in memory 10 on a double word boundary, or a word boundary. This is indicated at 32 in Figure 2. Computer 11 has the task of fetching the commands from memory 10, and shifting them so that they are all aligned in register 20 in standard format regardless of how they are aligned in memory 10.

The operands 33 and 34 on which instructions 30 and 31 operate are also illustrated in Figure 2. The T field indicates the length of operands 33 and 34. Operand 33 is addressed by the fields RA, A2 and A1; while operand 34 is addressed by the fields RB, B2 and B1. RA and RB indiczte index registers. Basically, operand 33 is addressed by the contents of index register RA plus the quantity A2A1 as indicated at 35, while operand 34 is addressed by the contents of index register RB plus B2B1 as indicated at 36. Various modifications to this addressing are described in the above cited publication on the Century 100.

Figure 3 illustrates how the multiple tasks which constitute execution of the high level language instructions of Figure 2 are partitioned among computers 11—14. As indicated in Table 1, computer 11 pre-fetches up to four sequential high level language instructions from memory 10. If one of these is a branch instruction, computer 11 pre-fetches both alternative instructions that may be executed depending on whether or not the branch is taken. These pre-fetched instructions are aligned into a single predetermined format, and loaded sequentially into register 20. Computer 11 also monitors the state of register 25 to determine if a branch is or is not taken. In response thereto, computer 11 loads the correct alternative instruction into register 20.

Computer 12 receives the instructions which are loaded into register 20. Subsequently, it computes the addresses of the operands for these instructions. That is, it computes the contents of index register RA plus A2A1; and computes the contents of index register B plus B2B1. If register 20 holds a single stage command, then computer 12 canculates the address that results from execution of the preceding command and tacks that on as the B address for the single stage command.

In addition, computer 12 directly executes all branch instructions. It does this by testing the flags in register 24 in accordance with the operation code of the particular branch instruction, and by setting the stage of register 25 to indicate that the branch condition either was or was not met. For OP codes which are not a branch, computer 12 passes the calculated operand addresses into either register 21 or 23 in accordance with the particular OP code as previously described in conjunction with Figure 2.

The function performed by computer 13 during the processing of the Add Binary, Subtract Binary, Move A Right To Left, and Compare Binary instructions is listed in Table 3. First, computer 13 receives the information loaded by computer 12 into the register 21. Subsequently, computer 13 pre-fetches one word of the A operand. If the bytes therein are not aligned on a word boundary, computer 13 performs no shifting of the alignment. Computer 13 also pre-fetches either one or two words of the B operand as is required to have at least as many bytes of the B operand pre-fetched as there are bytes of the A operand pre-fetched. The pre-fetched operands, and the A and B addresses, are then loaded into register 22 along with several pointers indicating the byte alignment of the A and B operands within the pre-fetched words.

As per TABLE 4 (fig. 3), computer 14 receives the addresses and operands from register 22 or 23 depending upon the particular high level language instruction being performed. Any remaining portion of the operands are fetched by computer 14. The operands are also operated on by computer 14 in accordance with the operation code. For some instructions, computer 14 sets flags in register 24 to indicate the results of the operation. These flags are utilized by computer 12 during branch commands as described above.

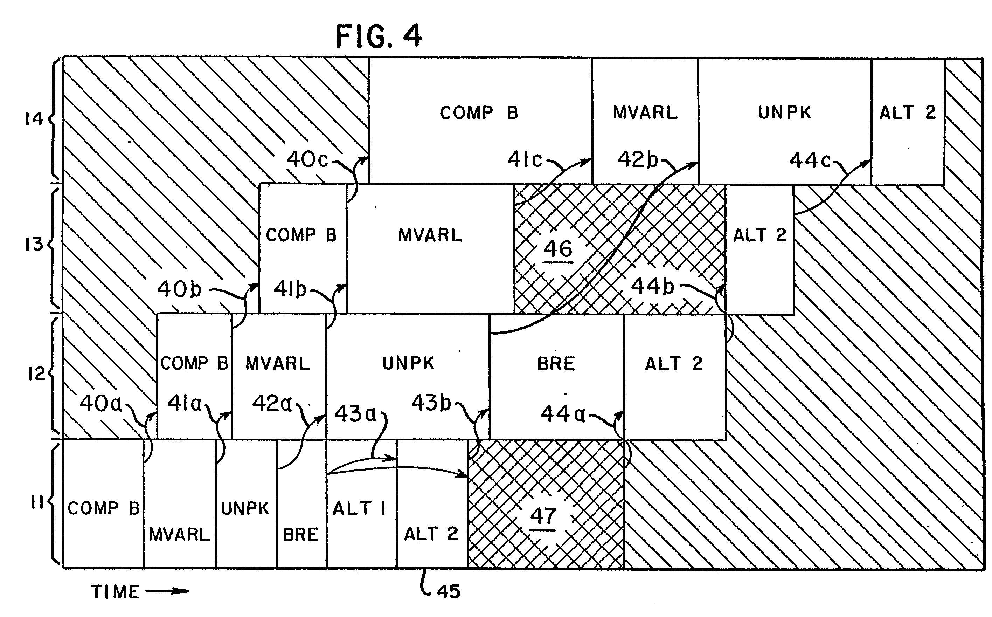

A timing diagram illustrating how computers 11—14 perform each of their assigned tasks in a pipeline fashion is contained in Figure 4. This figure illustrates the execution of the commands Compare Binary, Move A Right To Left, Unpack, and Branch On Equal as an example. Specifically, the sequence 40a, 40b, and 40c illustrates how computers 11—14 process the Compare Binary instruction. Similarly, the sequence 41a, 41b and 41c illustrates how computers 11—14 process the Move A Right To Left instruction. Both of these instructions of the high level language utilize all four stages of the pipeline.

In comparison, the sequence 42a and 42b illustrates how the Unpack command is performed by computers 11—14. As illustrated, only three stages of the pipeline are required to perform this command. Also in comparison, the sequence 43a and 43b illustrates how the Branch On Equal command is performed by computers 11—14. As illustrated, this command utilizes only computers 11 and 12.

Computer 11 fetches and aligns the Branch On Equal command, determines that a Branch command has been fetched, and in response thereto fetches two alternate commands. One of the alternate commands will be performed if the Branch condition fails, while the other alternative commands will be performed if the Branch condition is met. Computer 12 tests the flag in register 24 and selects one of the alternate commands based on the result of the test. This is indicated at 44a. After one of the alternate commands has been selected, it proceeds through the pipeline in the normal fashion as indicated at 44b and 44c.

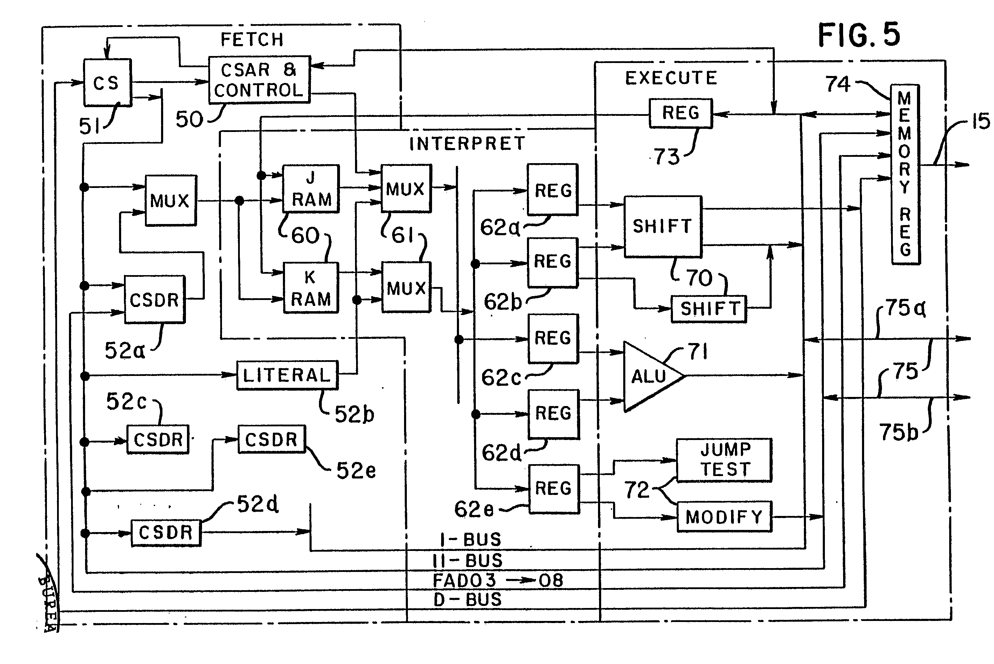

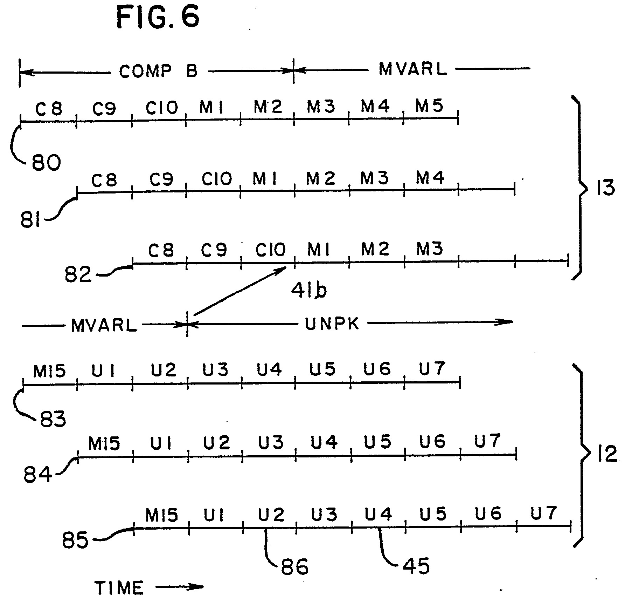

Due to the pipelined interconnection of computers 11—14, the execution of the high level language instruction is overlapped in time. This overlapping is clearly illustrated in Figure 4. For example, at time instant 45, computers 11—14 respectively are performing portions of the Branch On Equal instruction, the Unpack instruction, the Move A Right To Left instructions, and the Compare Binary instruction. At the same time, each of the computers 11—14 preferably have their own internal hardwired pipeline which is operating to perform their respective microprograms. This point is described in greater detail in conjunction with Figures 5 and 6.

When one stage of the pipeline formed by computers 11—14 needs data from the preceding stage and that data is not available, the stage which needs the data enters into a freeze state until the data is available. This is indicated at 46 and 47 in Figure 4. Specifically, the freeze state at 46 illustrates the condition where computer 13 has finished processing its portion of the Move A Right To Left command and is waiting for the next command for which it has tasks to perform. In this illustrated example, this command is the second alternative of the branch command.

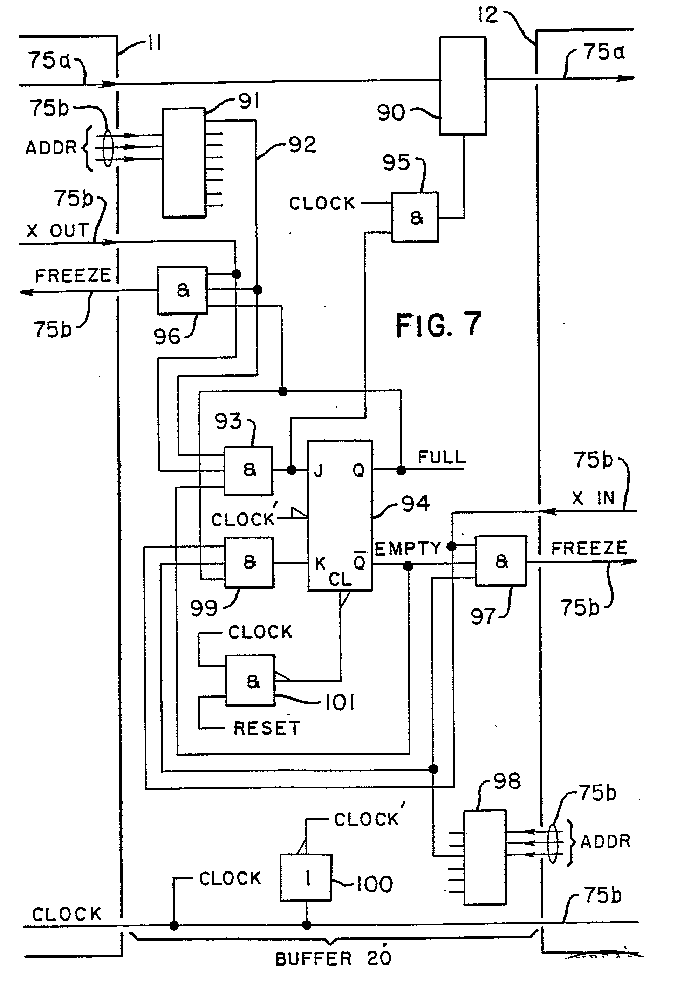

Similarly, the freeze state at 47 illustrates the case where computer 11 waits for computer 12 to determine which alternative of a branch condition is to be executed. Subsequent to that determination, computer 11 continues in its normal fashion to pre-fetch up to four sequential commands along the branch path which was taken. One preferred embodiment of interface 19 which implements this freeze function is illustrated and described in conjunction with Figure 7.

Referring now to Figure 5, there is illustrated a block diagram of a computer which suitably may be used as each of the computers 11—14. That is, four of the computers of Figure 5 are included within the computer of Figure 1. The computer of Figure 5 has its own three stage pipeline. These are termed the Fetch stage, the Interpret stage, and the Execute stage. Each of these stages are implemented by hardwired logic. This logic is defined in great detail in the publication "56—101 Processor Sub-system Functional Specification" from NCR Corporation.

Basically, the Fetch stage includes a control store address register and branch control logic 50, a control store memory 51, and control store data registers 52a—52e. These registers are partitioned to receive various portions of the microcommands which are read from control store memory 51. For example, register 52a receives and decodes a portion of the microcommands which addresses a register storage unit 60 within the Interpret stage.

The Interpret stage of the pipeline also includes a multiplexer 61 and buffer registers 62a—62e. Registers 62a and 62b form inputs to byte and bit shifting logic 70 which lies within the Execute stage. Registers 62c and 62d form inputs to an arithmetic logic unit 71 within the Execute stage. And register 62e forms an input to jump test logic and modify logic 72 within the Execute stage. The Execute stage also includes a buffer register 73 for the register storage unit 60. It further includes memory interface registers 74. Registers 74 couple via leads 15 to memory 10 as was previously described in conjunction with Figure 1.

A bus 75 interconnects units 71—74 and registers 20—25 of Figure 1. For example, bus 75 of computer 12 couples to registers 20, 21, 23, 24, and 25. Similarly, bus 75 of computer 13 couples to registers 21 and 22. Additional details of the lines and signals within bus 75 are described in conjunction with Figure 7.

Referring now to Figure 6, there is illustrated the detailed timing of how the multiple pipelines within the pipelined computer of Figure 1 interact with each other. Transition 41b in Figure 6 corresponds to transition 41b and the timing diagram of Figure 4. Near this transition, computer 13 operates on the Compare Binary command and the Move A Right To Left command. Simultaneously, computer 12 operates on the Move A Right To Left command and the Unpack command.

In Figure 6, reference numerals 80—82 respectively refer to the microinstructions in the Fetch stage, the Interpret stage, and the Execute stage of computer 13. Similarly, reference numerals 83—85 respectively refer to the microcommands in the Fetch stage, the Interpret stage, and the Execute stage of computer 12. Also, the mnemonics M1, M2, etc. refer to the first, second etc. microcommand of the program, in the corresponding stage, for the Move A Right To Left command; the mnemonics U1, U2, etc. refer to the first, second, etc. microcommand of the programs for the Unpack command; and the mnemonics C8, C9 and C10 refer to the eighth, ninth and tenth microcommand of the programs for the Compare Binary command.

At the previously described time instant 45 for example, the Fetch stage, the Interpret stage, and the Execute stage of computer 13 respectively operate on the fourth, third, and second microcommands in control store 13a which performs a portion of the Move A Right To Left command. Simultaneously, the Fetch stage, the Interpret stage, and the Execute stage of computer 12 respectively operate on the sixth, fifth and fourth microcommand in control store 12a which performs a portion of the Unpack command. Similarly, at a time instant 86, the Fetch stage of computer 13 operates on the second microcommand of the Move A Right To Left command; the Execute stage of computer 13 operates on the tenth microcommand of the Compare Binary instruction; and the Execute stage of computer 12 operates on the second microcommand of the Unpack instruction. Also at time instants 45 and 86, the pipelines within computers 11 and 14 are operating in a similar overlapped fashion.

The details of the interlocking interface 19 which interconnect computer 11—14 will now be described in conjunction with Figure 7. This figure is a detailed logic diagram of buffer 20. The other buffer registers 21—25 are of similar structure — the only difference being the number of information bits which is contained in the particular buffer register.

These bits are held in a register 90. Register 90 is a triggerable D-type register having a plurality of inputs which are loaded from bus 75a in computer 11 and unloaded to bus 75a in computer 12. ADDR signals on bus 75b are utilized to load register 90 and to test register 90 to determine if it is full or empty. To this end, signals ADDR couple to a decoder 91. Decoder 91 operates to select a particular binary code and indicates the presence of that code by a logic level on lead 92. Lead 92 couples to a logical AND gate 93 which operates to set a flip-flop 94 when it is empty, and to load register 90 through an AND gate 95.

A control signal Xout on a lead within bus 75b is an additional enabling signal which is connected to AND gate 93. Signal Xout indicates when computer 11 is executing a microcommand which loads the data on bus 75a into a register as specified by the ADDR code on bus 75b.

An AND gate 96 generates a signal FREEZE on another lead within bus 75b. This FREEZE signal is the logical AND of the FULL signal from flip-flop 94, the address detect signal on lead 92, and the Xout signal. It operates to halt computer 11 when it attempts to load a full register 90.

Similarly, an AND gate 97 provides a FREEZE signal for computer 12 which enables the pipeline in computer 12 to stop when it requests data from an empty register 90. This FREEZE signal is generated on a lead within bus 75b in computer 12. The inputs to gate 97 are generated by a decoder 98 which decodes ADDR signals on bus 75b in computer 12, the empty side of flip-flop 94, and an Xin signal on a lead within bus 75b in computer 12. The Xin signal indicates that computer 12 is requesting data to be put onto bus 75 by the register indicated by the ADDR signals. In comparison, when computer 12 requests data from a full register 90, the pipeline in computer 12 does not stop. Instead, it proceeds to take data from register 90. An AND gate 99 is provided to force flip-flop 94 to the EMPTY state after this data transfer occurs.

Timing signals are also provided for synchronizing all of the above described operations. These signals are called CLOCK and CLOCK'. An inverter 100 generates signal CLOCK' from signal CLOCK. Suitably, these signals are square waves with a 50 NS period. Also, a RESET signal and a NAND gate 101 are included to initialize flip-flop 94 to an EMPTY state whenever the entire system is reset.

This completes the disclosure of the embodiment of Figure 1. It should be pointed out however, that many modifications and changes may be made to the Figure 1 embodiment. For example, the pipelined computer of Figure 1 may be scaled up to include additional ones of the computers 11—14 within the interlocking interface 19, or it may be scaled down to include as few as two of the computers 11—14. Basically, as the number of computers is increased, the amount of overlap in the pipeline increases. Conversely, as the number of computers is decreased, the amount of overlap in the pipeline decreases. The tasks which each stage of the pipeline must perform may be assigned various ways as was described in conjunction with Figure 3.

As another alternative, the pipelined computer of Figure 1 may be expanded to include one or more hardware assist units. For example, a special hardwired assist unit which does high speed multiples and high speed divides may couple to computer 14. In operation, computer 14 would pass the operands to the hardware assist unit and receive the result therefrom. As another example, the hardware assist unit could couple directly between computers 12 and 13 to perform the extended set-up. In this configuration, only computers 11, 12 and 14 would be microprogrammed. This configuration would be attractive if the logic required to do the assigned tasks were relatively simple.

## Claims

1. A pipelined computer, including memory means (10) arranged to store programs of high level language instructions, a plurality of microprogrammed digital processor means (11—14) each coupled to said memory means (10), and interface means (19) intercoupling said processor means (11—14) to form a pipeline and including at least one buffer register means (20) coupled between first and second selected ones (11, 12) of said processor means (11—14), and synchronizing means, characterized in that said synchronizing means are coupled to said selected ones (11, 12) of said processor means (11—14) and to said buffer register means (20), in that said buffer register means (20) includes a buffer register (90) providing a single level of buffer storage, and in that said synchronizing means includes a bistable circuit (94) arranged to be controlled to a first stage upon said buffer register (90) being loaded and to be controlled to a second state upon said buffer register (90) being read, first gating means (96) coupled to said bistable circuit (94) and to said first selected one (11) of said processor means and adapted to provide a first control signal (FREEZE) in response to an output request signal (X OUT) from said first selected one (11) of said processor means when said bistable circuit (94) is in said first state (FULL), said first control signal (FREEZE) being adapted to halt operation of said first selected one (11) of said processor means (11—14); and second gating means (97) coupled to said bistable circuit (94) and to said second selected one (12) of said processor means and adapted to provide a second control signal (FREEZE) in response to an input request signal (X IN) from said second selected one (12) of said processor means when said bistable circuit (94) is in said second state (EMPTY), said second control signal (FREEZE) being adapted to halt operation of said second selected one (12) of said processor means (11—14).

2. A pipelined computer according to claim 1, characterized in that said first and second selected ones (11, 12) of said processor means are respectively upstream and downstream in said pipeline, said first and second selected ones (11, 12) of said processor means being adapted to respectively load and read said buffer register means (20), and in that there is provided further buffer register means (e.g. 24) coupled between a third and said second selected ones (14, 12) of said processor means lying respectively downstream and upstream in said pipeline, and adapted to respectively load and read said further buffer register means (e.g. 24).

3. A pipelined computer according to claim 1, characterized in that said pipeline includes four microprogrammed digital computer means forming respective first (11), second (12), third (13) and fourth (14) stages of said pipeline, adapted respectively to fetch said high level language instructions from said memory means (10) and align them in a predetermined alignment; to calculate memory addresses of the operands of the aligned instructions; to prefetch at least selected portions of said operands; and to perform operations on said operands.

4. A pipelined computer according to claim 3, characterized in that the first stage (11) of said pipeline is further adapted to pre-fetch alternative instructions when the fetched high level language instruction is a branch instruction and in that said second stage (12) of said pipeline is adapted to directly execute said branch instruction and provide information concerning the

13 **0 015 276** 14

result of the execution to said first stage (11) of said pipeline.

## Revendications

1. Calculateur canalisé, comprenant des moyens de mémoire (10) constitués pour emmagasiner des programmes d'instructions en langage de haut niveau, plusieurs moyens à processeurs numériques microprogrammés (11—14), connectés chacun auxdits moyens de mémoire (10), et des moyens d'interface (19) interconnectant lesdits moyens à processeurs (11—14) pour former une canalisation et comprenant au moins un moyen (20) à registre tampon monté entre des premier et second, choisis (11, 12), desdits moyens à processeurs (11—14), et des moyens de synchronisation, caractérisé en ce que lesdits moyens de synchronisation sont connectés auxdits, choisis (11, 12), desdits moyens à processeurs (11—14) et audit moyen à registre tampon (20), en ce que ledit moyen (20) à registre tampon comprend un registre tampon (90) qui présente un seul niveau de stockage tampon, et en ce que lesdits moyens de synchronisation comprennent un circuit bistable (94) agencé pour être commandé dans un premier état lorsque ledit registre tampon (90) est chargé, et pour être commandé dans un second état lorsque ledit registre tampon (90) est lu, un premier moyen à porte (96) connecté audit circuit bistable (94) et audit premier, choici (11), desdits moyens à processeurs et conçu pour produire un premier signal de commande (FREEZE) en réponse à un signal de demande de sortie (X OUT) provenant dudit premier, choisi (11), desdits moyens à processeurs lorsque ledit circuit bistable (94) est dans ledit premier état (FULL), ledit premier signal de commande (FREEZE) étant conçu pour arrêter le fonctionnement dudit premier, choisi (11), desdits moyens à processeurs (11—14); et un second moyen à porte (97) connecté audit circuit bistable (94) et audit second, choici (12), desdits moyens à processeurs et conçu pour produire un second signal de commande (FREEZE) en réponse à un signal de demande d'entrée (X IN) provenant dudit second, choisi (12), desdits moyens à processeurs lorsque ledit circuit bistable (94) est dans ledit second état (EMPTY), ledit second signal de commande (FREEZE) étant conçu pour arrêter le fonctionnement dudit second, choisi (12), desdits moyens à processeurs (11—14).

2. Calculateur canalisé selon la revendication 1, caractérisé en ce que lesdits premier et second, choisis (11, 12), desdits moyens à processeurs sont, respectivement, en amont et en aval dans ladite canalisation, lesdits premier et second, choisis (11, 12), desdits moyens à processeurs étant conçus pour, respectivement, charger et lire ledit moyen (20) à registre tampon, et en ce qu'il est prévu un autre moyen à registre tampon (par exemple 24) monté entre un troisième et lesdits seconds, choisis (14, 12), desdits moyens à processeurs s'étendant, respectivement, en aval et en amont dans ladite canalisation, et conçus pour, respectivement, charger et lire ledit autre moyen à registre tampon (par exemple 24).

3. Calculateur canalisé selon la revendication 1, caractérisé en ce que ladite canalisation comprend quatre calculateurs numériques microprogrammés formant des premier (11), deuxième (12), troisième (13) et quatrième (14) étages respectifs de ladite canalisation, conçus, respectivement, pour extraire lesdits instructions de langage de haut niveau desdits moyens de mémoire (10) et pour les aligner dans un alignement prédéterminé; pour calculer des adresses de mémoire des opérandes des instructions alignées; pour préextraire au moins des parties choisies desdites opérandes; et pour exécuter des opérations sur lesdites opérandes.

4. Calculateur canalisé selon la revendication 3, caractérisé en ce que le premier étage (11) de ladite canalisation est en outre conçu pour préextraire d'autres instructions lorsque l'instruction extraite de langage de haut niveau est une instruction de branchement et en ce que ledit deuxième étage (12) de ladite canalisation est conçu pour exécuter directement ladite instruction de branchement et pour transmettre audit premier étage (11) de ladite canalisation une information concernant le résultat de l'exécution.

## Patentansprüche

1. In Form einer Pipeline zusammengeschaltete Datenverarbeitungsanlage mit Speichervorrichtungen (10), die angeordnet sind zum Speichern von Programmen mit Befehlen einer hohen Programmiersprache, mit einer Mehrzahl von mikroprogrammierten digitalen Verarbeitungsvorrichtungen (11—14), die sämtlich mit den Speichervorrichtungen (10) gekoppelt sind, und mit Schnittstellenvorrichtungen (19), welche die Verarbeitungsvorrichtungen (11—14) miteinander zur Bildung einer Pipeline koppeln und zumindest eine Pufferregistervorrichtung (20) besitzen, welche zwischen ersten und zweiten ausgewählten (11, 12) der Verarbeitungsvorrichtungen (11—14) geschaltet ist, und mit Synchronisiervorrichtungen, dadurch gekennzeichnet, daß die Synchronisiervorrichtungen mit den ausgewählten (11, 12) der Verarbeitungsvorrichtungen (11—14) und mit der Pufferregistervorrichtung (20) gekoppelt sind, daß die Pufferregistervorrichtung (20) eine Pufferregister (90) aufweist, welches eine einzige Ebene der Pufferspeicherung bietet, und daß die Synchronisiervorrichtungen eine bistabile Schaltung (94) aufweisen, die angeordnet ist, in einen ersten Zustand gesteuert zu werden, wenn das Pufferregister (90) geladen worden ist, und in einen zweiten Zustand, wenn das Pufferregister gelesen worden ist, durch erste Gattervorrichtungen (96), die mit der bistabilen Schaltung (94) und der ersten ausgewählten (11) der Verarbeitungsvorrichtungen gekoppelt und geeignet sind, ein erstes Steuersignal (FREEZE) unter Ansprechen auf ein Ausgangsanforderungssignal (X OUT) von der ersten ausgewählten (11) der Verarbeitungsvorrichtungen abzugeben, wenn die bistabile Schaltung (94) in dem ersten Zustand (FULL) ist, wobei das erste Steuersignal (FREEZE) geeignet ist, die Operation der ersten ausgewählten (11) der Verarbeitungsvorrichtungen (11—14) anzuhalten; und durch zweite Gattermittel (97), die mit der bistabilen Schaltung (94) und mit der zweiten ausgewählten (12) der Verarbeitungsvorrichtungen gekoppelt und geeignet sind, ein zweites Steuersignal (FREEZE) unter Ansprechen auf ein Eingangsanforderungssignal (X IN) von der zweiten ausgewählten (12) der Verarbeitungsvorrichtungen abzugeben, wenn die bistabile Schaltung (94) in dem zweiten Zustand (EMPTY) ist, wobei das zweite Steuersignal (FREEZE) geeignet ist, die Operation der zweiten ausgewählten (12) der Verarbeitungsvorrichtungen (11—14) anzuhalten.

2. In Form einer Pipeline zusammengeschaltete Datenverarbeitungsanlage nach Anspruch 1, dadurch gekennzeichnet, daß die erste und zweite ausgewählte (11, 12) der Verarbeitungsvorrichtungen in der Pipeline entsprechend stromaufwärts und stromabwärts angeordnet sind, wobei die erste und zweite ausgewählte (11, 12) der Verarbeitungsvorrichtungen geeignet sind, die Pufferregistervorrichtung (20) entsprechend zu laden und zu lesen, und daß eine weitere Pufferregistervorrichtung (z.B. 24) vorgesehen ist, die zwischen eine dritte und eine zweite ausgewählte (14, 12) der Verarbeitungsvorrichtungen gekoppelt ist, die entsprechend stromabwärts und stromaufwärts in der Pipeline liegen, und die geeignet sind, die weitere Pufferregistervorrichtung (z.B. 24) entsprechend zu laden und zu lesen.

3. In Form einer Pipeline zusammengeschaltete Datenverarbeitungsanlage nach Anspruch 1, dadurch gekennzeichnet, daß die Pipeline vier mikroprogrammierte Digitalrecheneinrichtungen aufweist, die entsprechende erste (11), zweite (12), dritte (13) und vierte (14) Stufen der Pipeline bilden, die geeignet sind, entsprechend Befehle der hohen Programmiersprache aus der Speichervorrichtung (10) zu holen und diese in eine vorbestimmte Ausrichtung auszurichten; Speicheradressen der Operanden der ausgerichteten Befehle zu berechnen; zumindest ausgewählte Teile der Operanden im voraus herauszuholen; und Operationen mit den Operanden durchzuführen.

4. In Form einer Pipeline zusammengeschaltete Datenverarbeitungsanlage nach Anspruch 3, dadurch gekennzeichnet, daß die erste Stufe (11) der Pipeline ferner geeignet ist alternative Befehle im voraus herauszuholen, wenn der herausgeholte Befehl in der hohen Sprache ein Abzweigbefehl ist, und daß die zweite Stufe (12) der Pipeline geeignet ist, den Abzweigbefehl direkt auszuführen und Information betreffend des Ergebnisses der Ausführung an die erste Stufe (11) der Pipeline zu liefern.

FIG. I

MEMORY

COMMAND FETCH COMPUTER

BASIC SETUP COMPUTER

EXTENDED SETUP COMPUTER

EXECUTE COMPUTER

CMD

AI

AB

BC

A2

FLAG

0015276

# FIG. 2

| OP | $R_A$ | $A_2$ | $A_1$ | T | $R_B$ | $B_2$ | $B_1$ | OP | $R_A$ | $A_2$ | $A_1$ | OP | $R_A$ | $A_2$ | $A_1$ |

30 ← ── → 31 ── → 31 ──

WB/DWB  32 — WB/DWB  32 — WB/DWB

33

| | $AA_1$ | $AA_2$ | $AA_3$ | $AA_T$ | | | | | | $BB_1$ | $BB_2$ | $BB_3$ | $BB_T$ | |

34

35  36

$$[R_A] + A_2 A_1$$

$$[R_B] + B_2 B_1$$

0015276

# FIG. 3

TABLE 1 – COMPUTER 11

| | |
|---|---|
| FETCH UP TO FOUR SEQUENTIAL CMDS. | |
| FETCH ALT. CMD. IF BRANCH CMD. | |
| ALIGN. CMDS IN REG. 20 | |
| SWITCH TO ALT. CMD IF BRANCH OCCURS | |

TABLE 2 – COMPUTER 12

| |
|---|
| COMPUTE $\left[R_A\right] + A_2 A_1$ |
| COMPUTE $\left[R_B\right] + B_2 B_1$ |
| HOLDS $\left[R_B\right] + B_2 B_1$ FOR SUBSEQUENT SINGLE STG. CMDS. |
| EXECUTES ALL BRANCH CMDS DIRECTLY |

TABLE 3 – COMPUTER 13

| |
|---|
| FETCH ONE WORD OF AA |
| FETCH ONE OR TWO WORDS OF BB |
| GENERATE BYTE POINTERS |

TABLE 4 – COMPUTER 14

| |
|---|
| RECEIVE ADDRESSES OF OPERANDS FROM REG. 22/23 |
| FETCH AND EXECUTE REMAINING OPERANDS |
| SET FLAGS IN REG. 24 |

3

# FIG. 4

14

COMP B    MVARL    UNPK    ALT 2

40c      41c      42b      44c

13

COMP B    MVARL    46    ALT 2

40b    41b      44b

12

COMP B   MVARL   UNPK   BRE   ALT 2

40a   41a   42a   43a   43b   44a

11

COMP B   MVARL   UNPK   BRE   ALT 1   ALT 2   47

45

TIME ⟶

0015 276

FIG. 5

# FIG. 6

FIG. 7

BUFFER 20